# EUROPEAN PATENT APPLICATION

(11) **EP 4 760 590 A1**
(43) Date of publication of application: **17.06.2026**
(21) Application number: 24219183.1
(22) Date of filing: 11.12.2024
(51) Int. Cl.: G06K 19/07

(54) **LOW FREQUENCY DIFFERENTIAL RESONANT CAPACITOR**

(71) Applicant: EM Microelectronic-Marin SA, 2074 Marin (CH)
(72) Inventor: TU, Cao-Thong, 1003 Lausanne (CH)
(74) Representative: ICB SA

(57) **Abstract**

The invention relates to a switched resonant capacitor comprising a first capacitor and a second capacitor connected in series by means of a first switching element between a first conductor and a second conductor; the switched resonant capacitor further comprising a second switching element connected in parallel to the first capacitor and a third switching element connected in parallel to the second capacitor.

## Description

### Technical field

The present disclosure relates to the field of Low Frequency (LF) resonant capacitors.

Radio Frequency Identification (RFID) technology has revolutionized various industries by enabling automatic identification and tracking of objects through radio waves. Central to the operation of many RFID systems are Low Frequency (LF) resonant capacitors, which play a critical role in the performance and reliability of RFID tags.

Traditionally, RFID tags operating in the LF range (typically 125 kHz to 134 kHz) have faced several challenges that hinder their effectiveness. One major problem is the limited read range associated with LF tags, often necessitating close proximity between the reader and the tag. This limitation is partly due to the resonant frequency characteristics of the LF resonant capacitors, which can affect the efficiency of energy transfer between the reader and the tag. The effectiveness of these tags is often the quality factor, or Q factor, of the resonant capacitors.

The Q factor of a resonant circuit, which includes the capacitor and an inductor, is a measure of its selectivity and energy efficiency. It is defined as the ratio of the resonant frequency to the bandwidth of the resonance curve. A high Q factor indicates that the circuit can store energy efficiently and has a narrow bandwidth, allowing for better sensitivity to a specific frequency. Conversely, a low Q factor results in broader bandwidth, which diminishes the energy storage capability and leads to less sensitivity.

In the context of LF RFID tags, a low Q factor can lead to several issues that negatively impact the reading range or sensing distance. Specifically, tags with lower Q factors tend to dissipate energy more quickly due to the occurrence of lossy paths across the capacitors, resulting in weaker signals being transmitted back to the RFID reader. This reduced energy transfer limits the effective range at which the RFID tag can be read, necessitating closer proximity between the tag and the reader than ideally desired.

The manufacturing process itself can also introduce variability in the Q factor of LF resonant capacitors. Inconsistencies in material quality, fabrication methods, and component tolerances can lead to a wide range of Q factors across different batches of capacitors, especially since advanced manufacturing processes like laser fuse process are still to be avoided due to the high cost and time intensiveness. Hence, the variability caused by manufacturing processes can make it difficult for manufacturers to achieve uniform performance in RFID tags, resulting in potential reliability issues in applications where consistent read range and sensitivity are critical.

In summary, the Q factor of LF resonant capacitors is a key determinant of the performance of RFID tags. Low Q factors can lead to reduced read ranges, increased susceptibility to environmental variability, and inconsistencies in manufacturing. Addressing these challenges is essential for improving the reliability and functionality of RFID technology across diverse applications.

### Summary of the invention

According to a first aspect of the present disclosure, this and other objectives are achieved by a switched resonant capacitor comprising a first capacitor and a second capacitor connected in series by means of a first switching element between a first conductor and a second conductor; the switched resonant capacitor further comprising a second switching element (2a) connected in parallel to the first capacitor (1a) and a third switching element (2b) connected in parallel to the second capacitor (1b).

According to a second aspect of the present disclosure, the second switching element is a transistor and the gate of the transistor is connected to the second conductor.

According to a third aspect of the present disclosure, the third switching element is a transistor and the gate of the transistor is connected to the first conductor.

According to a further aspect of the present disclosure, a first terminal of the first capacitor is connected to the first conductor, a second terminal of the first capacitor is connected to the first switching element and a first terminal of the second capacitor is connected to the first switching element and a second terminal of the second capacitor is connected to the second terminal.

According to a further aspect of the present disclosure, a first terminal of the second switching element is connected to the first conductor and a second terminal of the second switching element is connected to the second terminal of the first capacitor.

According to a further aspect of the present disclosure, a first terminal of the third switching element is connected to the second conductor and a second terminal of the third switching element is connected to the second terminal of the second capacitor.

According to a further aspect of the present disclosure, an electronic circuit comprising at least one switched resonant capacitor according to any one of the preceding aspects and a pseudo ground generator is envisaged.

According to a further aspect, the pseudo ground generator further comprises a first switching element and a second switching element, wherein a terminal of the first switching element is connected to the first conductor and a terminal of the second switching element is connected to the second conductor.

According to a further aspect of the present disclosure, the first and second switching element of the pseudo ground generator and the first and second switching element of the switched resonant capacitor are formed as transistors and the specifications of the first and second switching elements of the pseudo ground generator and the specifications of the first and second switching elements of the switched resonant capacitor are identical or scaled by the same factor.

According to further aspects of the present disclosure, an RFID tag comprising an electronic circuit according to the different aspects and an asset comprising the RFID tag according to the different aspects is envisaged.

### Brief description of the drawings

In the following, embodiments of the current disclosure are illustrated by making reference to the drawings, in which:
- Figure 1 shows a generic design of switched resonant capacitors according to the prior art.
- Figures 2A and 2B show a further design of a pseudo ground generator and a resonant capacitor according to the prior art with the representation of an on and off state.
- Figures 3A and 3B show a system according to the main embodiment of the present disclosure.
- Figure 4 shows a comparison of performance of a capacitor according to the prior art, wherein a difference between ideal and real behaviours due to lossy currents is depicted.
- Figure 5 shows the performance of the capacitor according to the current disclosure compared to a perfect capacitor and with respect to the prior art.
- Figure 6 shows a typical example of schematic representation of a RFID tag.

### Detailed description of the invention

Unless otherwise defined, all terms used in disclosing the application, including technical and scientific terms, have the meaning as commonly understood by one of ordinary skill in the art to which this application belongs. By means of further guidance, term definitions are included to better appreciate the teaching of the present application.

In the following passages, different aspects of the application are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present application. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the application, and form different embodiments, as would be understood by those in the art. For example, in the appended claims, any of the claimed embodiments can be used in any combination.

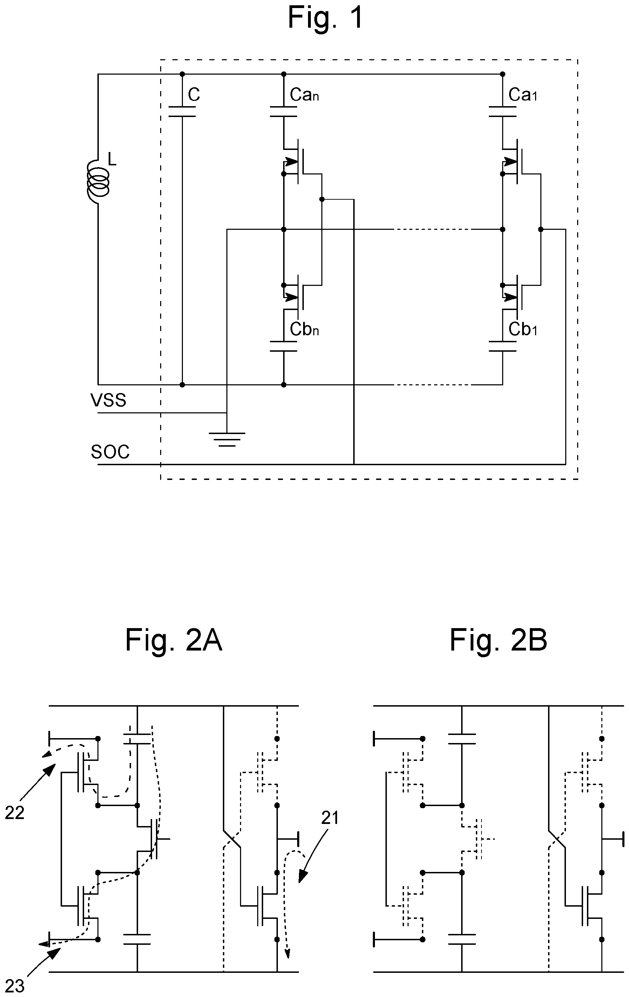

In Figure 1 a generic design of switched resonant capacitors according to the prior art is disclosed. Usually, a plurality of switched capacitors (Ca₁, Cb₁, ..., Cn₁, Cn₂) are arranged in parallel to a coil L, functioning as an antenna, and successively connected by means of a plurality of switching elements, which are activated by means of a signal.

Figure 2A shows a further design according to the prior art of a resonant capacitor, wherein a pseudo ground generator is used. A pseudo ground generator creates a reference voltage point based on first conductor (6) and second conductor (7) to be the minimal electrical potential of the electrical potentials of the 2 conductors (6 and 7), this reference point is connected to the system ground. It stabilizes signal processing and provides a low-impedance path for AC signals while isolating them from DC levels. The pseudo ground generator provides a stable reference point for the active components. It helps ensure that these components operate correctly by minimizing noise and providing a consistent voltage level for signal processing. The pseudo ground allows the tag to handle AC signals from the resonant circuit without interference from variations in the actual ground potential, which could degrade performance.

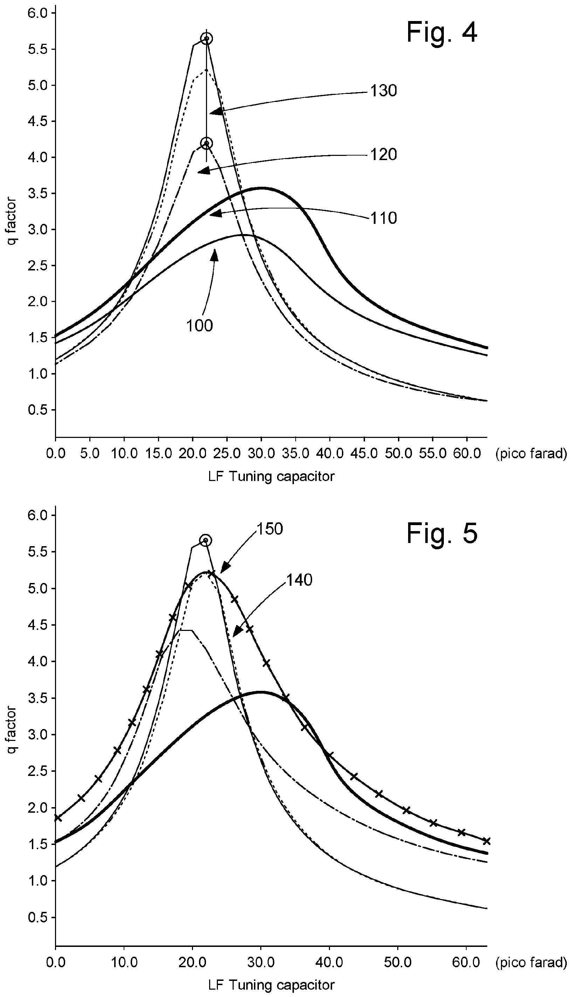

In these cases when a pseudo ground generator must be used due to the lack of a stable ground, during the periods in which the switches are on, lossy paths 22, 23 occur. The impact of these leakage currents is severe since in LF communication, those small imperfections seriously affect the Q factor of the LC resonant system, hereby degrading the reading distance. As it can be seen with reference to Figure 4, this effect reduces the coil voltages significatively. While 130 and 120 represent the voltages for the ideal representation of the circuit and the resulting coil voltages, 100 and 110 show how said lossy currents affect the Q factor and hence the coil voltages.

Figure 2B shows the design of Figure 2A, wherein the switches are off, hence not presenting any current.

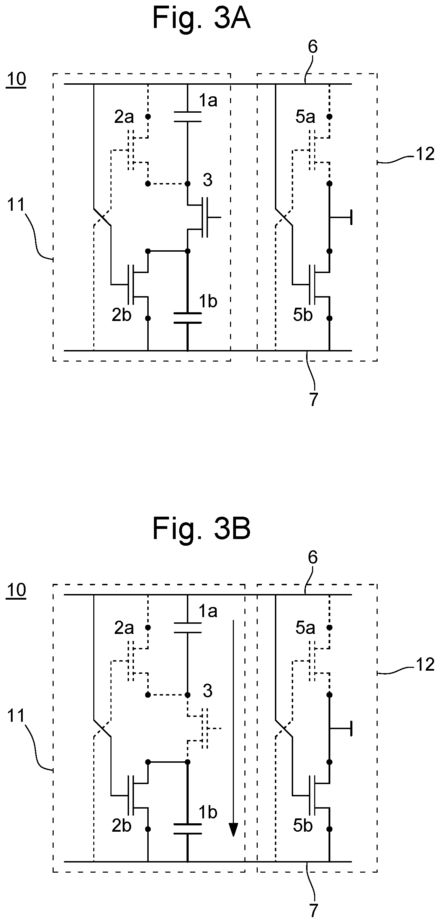

In view of the disadvantages as describe with relation to the previous figure, the advantages of the current disclosure will be made clear with reference to Figures 3A and 3B.

A switched resonant capacitor 11 according to the present disclosure comprises a first capacitor 1a and second capacitor 1b, wherein a first terminal of the first capacitor 1a is connected to a first conductor 6, and a first terminal of the second capacitor 1b is connected to a second conductor 7. The second terminal of capacitors 1a and 1b are connected to a first switching element 3 hereby forming a series connection between the first conductor 6 and the second conductor 7. In parallel to respective first and second capacitors 1a and 1b, the switched resonant capacitor 11 further comprises a second switching element 2a and a third switching element 2b. Further, the gate of the second switching element 2a is connected to the second conductor 7 and the gate of the third switching element 2b is connected to the first conductor 6. When the pseudo ground generator as depicted in Figure 3A sets the voltage of conductor 6 to be bigger than the voltage of conductor 7, i.e., a single ended path from conductor 6 to conductor 7 is generated when the switching element 3 is on which goes through capacitor 1a, switching element 3 and switching element 2b.

According to a further embodiment, the second switching element 2a is a transistor and the gate of the transistor is connected to the second conductor 7. According to a further embodiment, the third switching element 2b is a transistor and the gate of the transistor is connected to the first conductor 6.

In Figure 3B, the case in which the switching element 3 is off is depicted. In this case, due to the activated gate of switching element 2b, capacitor 1b can be discharged accordingly. In both Figure 3A and 3B, the case depicted is that in which the voltage of the first conductor 6 is bigger than the voltage of the second conductor 7, however this is not limiting for the operation of the current disclosure.

The current disclosure envisages as well an electronic circuit 10 comprising a pseudo ground generator 12 and at least one switched resonant capacitor 11 according to the different embodiments of the present disclosure.

According to a further embodiment, the pseudo ground generator further comprises a first switching element 5a and a second switching element 5b, wherein a terminal of the first switching element 5a is connected to the first conductor 6 and a terminal of the second switching element 5b is connected to the second conductor 7.

According to a further embodiment, the first and second switching element (5a, 5b) of the pseudo ground generator and the first and second switching element (2a, 2b) of the switched resonant capacitor are formed as transistors and the specifications of the first and second switching elements of the pseudo ground generator and the specifications of the first and second switching elements of the switched resonant capacitor are identical or scaled by the same factor.

With respect to Figures 4 and 5, the different performances of the switched capacitors as depicted in Figure 2A, see Figure 4, and Figures 3 are depicted, wherein 100 depicts voltage magnitude of electrode 6 and 7 with initial design (similar to figure 1), 110 represents voltage magnitude of electrode 6 and 7 with initial design with minimal current consumption of the tag, 120 is voltage magnitude of electrode 6 and 7 with fixed capacitor maximal current consumption, 130 is voltage magnitude of electrode 6 and 7 with fixed capacitor minimal current consumption, 140 is voltage magnitude of electrode 6 and 7 after correction with a minimal current consumption, 150 is voltage magnitude of electrode 6 and 7 after correction minimal current consumption. Comparison between 140 and 150 shows that applying the design described in figure 2A 2B allows reaching similar q factor compared to fix capacitor where leakage issue does not exist.

According to a further embodiment, an RFID tag comprising an electronic circuit 10 according to any of the embodiments explained above.

According to a further embodiment, an asset comprising the RFID tag according to the different aspects is envisaged. As explained above, RFID tags are widely used in logistics, stock management, animal husbandry, event management and many other fields. Hence, an asset may be an object or living animal which is tracked or identified by means of a corresponding RFID.

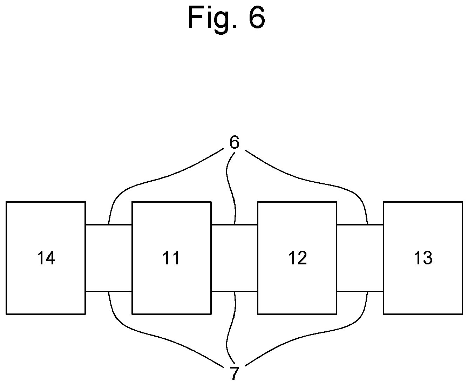

Figure 6 represents a full schematic representation of how an RFID tag is formed by the at least one switched capacitor 11 and the pseudo ground generator 12 being connected to the tag's active components 14 and coil antenna 13.

When the RFID reader sends a signal, the resonant LC circuit formed by switched capacitors 11 and coil/antenna 13 of the tag picks up the electromagnetic energy. The virtual ground ensures that the tag's active components can respond appropriately, processing the incoming signal. The tag then modulates its response based on the data it needs to send back to the reader. The modulated signal is transmitted back through the resonant circuit, utilizing the efficient energy transfer provided by the tuned LC circuit.

In summary, an LF RFID tag with a virtual ground generator and a resonant capacitor operates through the synergy of these components. The resonant circuit enables efficient energy absorption and signal transmission, while the virtual ground generator fixes the ground of the active circuitry. By having a switched capacitor according to the different embodiments of the present disclosure, the tag's performance is enhanced, ensuring reliable communication and data transfer in RFID applications at a greater sensing distance.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details, representative apparatus and method, and illustrative example shown and described.

Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

## Claims

1. Switched resonant capacitor comprising a first capacitor (1a) and a second capacitor (1b) connected in series by means of a first switching element (3) between a first conductor (6) and a second conductor (7); the switched resonant capacitor further comprising:
- a second switching element (2a) connected in parallel to the first capacitor (1a);
- a third switching element (2b) connected in parallel to the second capacitor (1b).

2. Switched resonant capacitor according to claim 1, wherein the second switching element (2a) is a transistor and the gate of the transistor is connected to the second conductor (7).

3. Switched resonant capacitor according to claim 1 or 2, wherein the third switching element (2b) is a transistor and the gate of the transistor is connected to the first conductor (6).

4. Switched resonant capacitor according to any one of the preceding claims, wherein a first terminal of the first capacitor (1a) is connected to the first conductor (6), a second terminal of the first capacitor (1a) is connected to the first switching element (3) and a first terminal of the second capacitor (1b) is connected to the first switching element (3) and a second terminal of the second capacitor (1b) is connected to the second terminal (7).

5. Switched resonant capacitor according to anyone of the preceding claims, wherein a first terminal of the second switching element (2a) is connected to the first conductor (6) and a second terminal of the second switching element is connected to the second terminal of the first capacitor (1a).

6. Switched resonant capacitor according to claim 1, wherein a first terminal of the third switching element (2b) is connected to the second conductor (7) and a second terminal of the third switching element is connected to the second terminal of the second capacitor (1b).

7. Electronic circuit comprising at least one switched resonant capacitor according to any one of the preceding claims and a pseudo ground generator (12).

8. Electronic circuit according to claim 7, wherein the pseudo ground generator comprises a first switching element (5a) and a second switching element (5b), wherein a terminal of the first switching element is connected to the first conductor (6) and a terminal of the second switching element (5b) is connected to the second conductor (7).

9. Electronic circuit according to claim 8, wherein the first and second switching element of the pseudo ground generator (12) and the first and second switching element of the switched resonant capacitor (11) are formed as transistors and the specifications of the first and second switching elements of the pseudo ground generator and the specifications of the first and second switching elements of the switched resonant capacitor are identical or scaled by the same factor.

10. RFID tag comprising an electronic circuit according to any one of the preceding claims.

11. Asset comprising an RFID tag according to claim 10.
